# EUROPEAN PATENT APPLICATION

(11) **EP 4 571 794 A1**
(43) Date of publication of application: **18.06.2025**
(21) Application number: 23852354.2
(22) Date of filing: 25.07.2023
(51) Int. Cl.: H01B 17/56, H02K 3/34

(54) **INSULATING SHEET**

(30) Priority: 08.08.2022 JP 2022126149
(71) Applicant: Nitto Shinko Corporation, Sakai-shi, Fukui 910-0381 (JP)
(72) Inventor: FUJIKI, Jun, Sakai-shi, Fukui 910-0381 (JP); YAMAGUCHI, Takeshi, Sakai-shi, Fukui 910-0381 (JP); TOKUNAGA, Risako, Sakai-shi, Fukui 910-0381 (JP)
(74) Representative: Stolmár & Partner Patentanwälte PartG mbB
(86) International application number: PCT/JP2023/027094
(87) International publication number: WO 2024/034378

(57) **Abstract**

An insulating sheet according to the present invention includes: an adhesive layer; and an insulating paper sheet laminated on one surface of the adhesive layer to form an outermost layer, in which the insulating paper sheet is made of fully aromatic polyamide paper including fully aromatic polyamide fibers, the adhesive layer is made of a resin composition, and a temperature at which a mass reduction by 5 mass % of the adhesive layer is observed in thermogravimetric differential thermal analysis (TG-DTA) is 350 °C or less.

## Description

### CROSS-REFERENCE TO RELATED APPLICATION

This application claims priority to Japanese Patent Application No. 2022-126149, the disclosure of which is incorporated herein by reference in its entirety.

### FIELD

The present invention relates to an insulating sheet. More specifically, the present invention relates to a motor insulating sheet used as an insulating sheet for a drive motor of an automobile.

### BACKGROUND

Conventionally, a drive motor of an automobile includes a rotor, and a stator for generating force to rotate the rotor. The stator includes a plurality of coils, and is configured to rotate the rotor by the Lorentz force obtained by creating a magnetic field around the plurality of coils.

In the drive motor as above, the coils are each formed of, for example, a plurality of segment conductors connected to each other, and are generally used by being mounted on a member called a stator core or rotor core, which is formed of magnetic steel plates laminated on each other.

In the drive motor as above, a core such as the stator core or the rotor core has a plurality of slot grooves, and the coils are housed in the plurality of slot grooves. In the drive motor as above, an insulating sheet is housed together with the coils in each of the slot grooves to ensure insulation between the coils and an inner wall surface of the slot groove. More specifically, the insulating sheet is housed in the slot groove in a state of being wrapped around the coils. The coils with the insulating sheet wrapped therearound are fixed within the slot groove via an insulating resin (e.g., epoxy varnish) impregnated in the slot groove.

As described in, for example, Patent Literature 1 below, the insulating sheet has a five-layer structure including: a polyester resin layer made of a polyester film; two paper sheet layers disposed respectively on an upper side and a lower side of the polyester resin layer; and two adhesive layers disposed respectively between the polyester resin layer and one of the paper sheet layers and between the polyester resin layer and the other one of the paper sheet layers. That is, the insulating sheet has the five-layer structure with the paper sheet layers disposed as surface layers and the polyester resin layer disposed as an inner layer. As described in Patent Literature 1 below, each of the paper sheet layers is made of a paper sheet, and used for the paper sheet is so-called "aramid paper" made from fully aromatic polyamide fibers as the main material. Further, each of the adhesive layers is generally made from an adhesive including a polyurethane resin as the main component.

### CITATION LIST

### Patent Literature

Patent Literature 1: JP 2016-054629 A

### SUMMARY

### Technical Problem

In the recent years, there has been an increasing demand for a higher powered drive motor of the automobile. The higher powered drive motor of the automobile requires the insulating sheet used therefor to have higher heat resistance and higher voltage resistance.

Fully aromatic polyamide paper such as the aramid paper is excellent in heat resistance, and the polyester film is excellent in heat resistance and voltage resistance. As described in Patent Literature 1 above, therefore, the insulating sheet having the fully aromatic polyamide paper disposed as the outer layers and the polyester layer made of the polyester film disposed as the inner layer can fulfill the demand for the higher powered drive motor.

When the insulating sheet as described in Patent Literature 1 is used to ensure insulation between the coil and the inner wall surface of the slot groove of the drive motor as above, the inner wall surface of the slot groove reaches a high temperature when the drive motor is driven. Since the fully aromatic polyamide paper has excellent heat resistance as described above, an organic matter included in the fully aromatic polyamide paper is less likely to be thermally decomposable on an outer surface of the fully aromatic polyamide paper (i.e., the surface in contact with the inner wall surface of the slot groove) even when the inner wall surface of the slot groove reaches a high temperature. Consequently, decomposed products of the organic matter are not gasified but remain on the outer surface of the fully aromatic polyamide paper in a form of free carbon, from which conductive paths result on the outer surface of the fully aromatic polyamide paper. That is, tracking may occur on the outer surface of the fully aromatic polyamide paper.

Even if very small conductive paths are formed on the outer surface of the fully aromatic polyamide paper, tracking occurs remarkably on the outer surface of the fully aromatic polyamide paper when the power of the drive motor further increases.

When the tracking occurs as the power of the drive motor increases as described above, the insulating sheet becomes inferior in tracking resistance, which is not preferable. Similar to the case above, the insulating sheet also becomes inferior in tracking resistance when the insulating sheet is used for other applications than the drive motor. However, no sufficient consideration appears to have been made on suppressing the insulating sheet from being inferior in tracking resistance.

It is therefore an object of the present invention to provide an insulating sheet capable of exhibiting sufficient tracking resistance even when fully aromatic polyamide paper including fully aromatic polyamide fibers is used as insulating paper.

### Solution to Problem

An insulating sheet according to the present invention includes: an adhesive layer; and an insulating paper sheet laminated on one surface of the adhesive layer to form an outermost layer, in which the insulating paper sheet is made of fully aromatic polyamide paper including fully aromatic polyamide fibers, the adhesive layer is made of a resin composition, and a temperature at which a mass reduction by 5 mass % of the adhesive layer is observed in thermogravimetric differential thermal analysis (TG-DTA) is 350 °C or less.

### BRIEF DESCRIPTION OF DRAWINGS

Fig. 1 is a cross-sectional view showing a configuration of an insulating sheet according to one embodiment of the present invention.
Fig. 2 is a schematic perspective view of a stator of a drive motor of an automobile.
Fig. 3 is a schematic plan view of a stator core.
Fig. 4 is an enlarged view of part A in Fig. 3.

### DESCRIPTION OF EMBODIMENTS

Next, a description will be given on one embodiment of the present invention. Hereinafter, one embodiment of the present invention is referred to simply as this embodiment.

An insulating sheet according to this embodiment includes an adhesive layer and an insulating paper sheet laminated on one surface of the adhesive layer to form an outermost layer. In the insulating sheet according to this embodiment, the insulating paper sheet is made of fully aromatic polyamide paper including fully aromatic polyamide fibers. In the insulating sheet according to this embodiment, the adhesive layer is made of a resin composition, and a temperature at which a mass reduction by 5 mass % is observed in thermogravimetric differential thermal analysis (TG-DTA) is 350 °C or less. The resin composition can include an organic solvent (e.g., methyl ethyl ketone (MEK)) for suspending or dissolving a resin. That is, the resin composition can be a resin solution including the organic solvent.

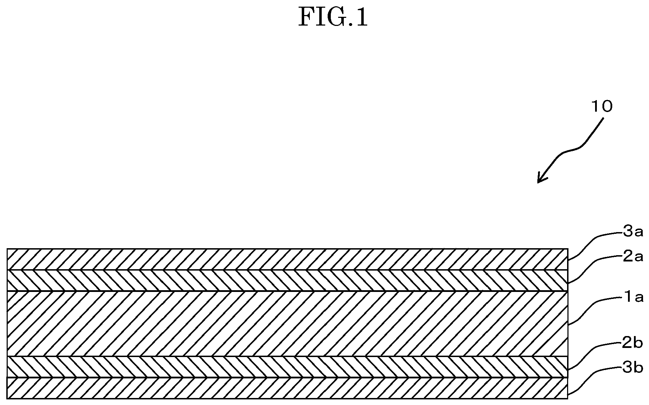

A description will be hereinafter given on the insulating sheet according to this embodiment by taking, as an example, an insulating sheet having a five-layer structure as shown in Fig. 1.

### (Insulating sheet)

As shown in Fig. 1, an insulating sheet 10 according to this embodiment is formed of a first insulating paper sheet 3a and a second insulating paper sheet 3b laminated on respective surfaces of a base material film 1a via a first adhesive layer 2a and a second adhesive layer 2b, respectively. That is, the insulating sheet 10 according to this embodiment has a five-layer structure in which the first insulating paper sheet 3a, the first adhesive layer 2a, the base material film 1a, the second adhesive layer 2b, and the second insulating paper sheet 3b are laminated in this order. In the insulating sheet 10 according to this embodiment, the first insulating paper sheet 3a and the second insulating paper sheet 3b serve as outermost layers.

The insulating sheet 10 according to this embodiment is used, for example, as an insulating sheet for a drive motor of an automobile. Examples of the drive motor of the automobile include an oil-cooled drive motor. The oil-cooled drive motor is a drive motor cooled by a cooling oil such as ATF. Examples of the automobile include a hybrid electric vehicle (HEV) and an electric vehicle (EV). Examples of the drive motor include an HV motor, a motor generator, an alternator, a 4WD motor, an oil pump motor, an EPS motor, a compressor motor, and an in-wheel motor.

In the insulating sheet 10 according to this embodiment, the first insulating paper sheet 3a and the second insulating paper sheet 3b are made of fully aromatic polyamide paper including fully aromatic polyamide fibers. The fully aromatic polyamide paper is excellent in heat resistance and allows the insulating sheet 10 according to this embodiment to exhibit excellent heat resistance when the first insulating paper sheet 3a and the second insulating paper sheet 3b are made of the fully aromatic polyamide paper. The fully aromatic polyamide paper is preferably fabricated by the wet papermaking method using fully aromatic polyamide fibers.

Examples of the fully aromatic polyamide paper include a product obtained by fiberizing a condensation polymer of phenylenediamine and phthalic acid (fully aromatic polyamide), in which all groups other than the amide group are formed of benzene rings, and using the fiberized fully aromatic polyamide fibers as the main component. As the fully aromatic polyamide paper, used can be, for example, a product commercially available under the trade name "Nomex (Registered Trademark)" from DuPont.

The fully aromatic polyamide paper can have a surface subjected to coating treatment using a coating agent, or can have a surface without being subjected to coating treatment. Examples of the coating agent include a product including a polyamide resin. As the polyamide resin, a methoxymethylated polyamide resin in which the amide group portion is at least partially methoxymethylated is preferably used.

Each of the first insulating paper sheet 3a and the second insulating paper sheet 3b can have a thickness of 20 µm or more, can have a thickness of 25 µm or more, can have a thickness of 30 µm or more. The thickness of each of the first insulating paper sheet 3a and the second insulating paper sheet 3b can be 250 µm or less, can be 10 µm or less, can be 70 µm or less. Since, in the insulating sheet 10 according to this embodiment, the fully aromatic polyamide paper is used for the first insulating paper sheet 3a and the second insulating paper sheet 3b, the first insulating paper sheet 3a and the second insulating paper sheet 3b each having a thickness falling within the numerical range as above can impart high mechanical properties to the insulating sheet 10. Further, the first insulating paper sheet 3a and the second insulating paper sheet 3b each having a thickness falling within the numerical range as above allow the insulating sheet 10 subjected to bending process to have excellent shape retaining properties. The thickness of the first insulating paper sheet 3a and the thickness of the second insulating paper sheet 3b can be the same as each other or can be different from each other.

The thickness of each of the first insulating paper sheet 3a and the second insulating paper sheet 3b can be determined by measuring the thicknesses of 10 randomly selected portions of the insulating paper sheet using a digital micrometer and arithmetically averaging these measured values.

In the insulating sheet 10 according to this embodiment, the first adhesive layer 2a can be formed, for example, by applying the resin composition to one surface of the base material film 1a, and the second adhesive layer 2b can be formed by applying the resin composition to the other surface of the base material film 1a. The first adhesive layer 2a can be formed also by applying the resin composition to one surface of the first insulating paper sheet 3a (i.e., surface opposed to the base material film 1a), and the second adhesive layer 2b can be formed also by applying the resin composition to one surface of the second insulating paper sheet 3b (i.e., surface opposed to the base material film 1a). The resin composition is applied in an amount of preferably 10 g/m² or more and 20 g/m² or less. The amount of application being 10 g/m² or more enables the first adhesive layer 2a and the second adhesive layer 2b to have sufficient bonding strength. The amount of application being 20 g/m² or less enables the first adhesive layer 2a and the second adhesive layer 2b to be formed thinly. The first adhesive layer 2a and the second adhesive layer 2b formed thinly as described above enable the insulating sheet 10 according to this embodiment to have a small thickness. Consequently, the insulating sheet 10 according to this embodiment can be easily placed in a small and narrow space.

The thickness of the first adhesive layer 2a and the thickness of the second adhesive layer 2b can be the same as each other or can be different from each other, but can preferably be the same as each other.

The resin composition preferably includes, as a resin, an acrylic resin, a polyurethane resin, an epoxy resin, an epoxy ester resin, a polyester resin, a silicone resin, or the like. The resin composition more preferably includes, as the resin, the acrylic resin, the polyurethane resin, or the epoxy resin, and particularly preferably includes the acrylic resin.

Used as the acrylic resin can be, for example, a homocopolymer of a monomer represented by a formula (1) below or a copolymer having a constituent unit based on the monomer.

CH₂ = C(R¹) - COOR² ...(1)

where R¹ represents a hydrogen atom or a lower alkyl group, and R² represents an alkyl group having 1 to 12 carbon atoms.

Specifically, polyacrylates such as polymethyl acrylate, polyethyl acrylate, and polybutyl acrylate (PAB); polymethacrylates such as polymethyl methacrylate, polyethyl methacrylate, and polybutyl methacrylate; and copolymers such as an ethylene-acrylate copolymer, an ethylene-acrylate-acrylic acid copolymer, a styrene-methacrylate-acrylic acid copolymer, an acrylate-vinyl chloride copolymer, an acrylate-acrylic acid copolymer, a methacrylate-vinyl chloride copolymer, a styrene-methacrylate-butadiene copolymer, and a methacrylate-acrylonitrile copolymer can be individually used or two or more of them can be used in combination.

Among these, it is preferable to use polybutyl acrylate (PAB) as the acrylic resin. When the resin composition includes the polybutyl acrylate as the acrylic resin, it is preferable that the resin composition include polyisocyanate in addition to the polybutyl acrylate. In the resin composition including the polybutyl acrylate and the polyisocyanate as described above, the polybutyl acrylate is preferably crosslinked with the polyisocyanate. Further, in the case as above, the resin composition includes preferably 3 mass parts or more, more preferably 10 mass parts or more, of the polyisocyanate based on 100 mass parts of the polybutyl acrylate. The resin composition includes preferably 25 mass parts or less, more preferably 20 mass parts or less, of the polyisocyanate based on 100 mass parts of the polybutyl acrylate. The polybutyl acrylate (PAB) can have a carboxy group.

When the resin composition includes the polybutyl acrylate and the polyisocyanate, it is preferable that the resin composition further include terpene phenol. In the resin composition, the polyacrylate and the terpene phenol are preferably crosslinked with the polyisocyanate. In the case as above, the resin composition includes preferably 1 mass part or more and 30 mass parts or less of the terpene phenol based on 100 mass parts of polybutyl acrylate. The resin composition can include alkylphenol in substitution for the terpene phenol. In the case as above, the resin composition includes preferably 1 mass part or more and 30 mass parts or less of the alkylphenol based on 100 mass parts of polybutyl acrylate.

The polyurethane resin is obtained by a urethane bond of reactive components including a polyol component having two or more hydroxyl groups in one molecule and a polyisocyanate component having two or more isocyanate groups in one molecule. The "polyurethane resin" herein does not refer to a "polyurethane resin" in a broad sense including a "polyurethane-urea resin", but refers to a "polyurethane resin" not substantially including urea bonds.

As the polyol component, any conventionally known polyol component used in synthesizing a polyurethane resin can be used. Specific examples of the polyol component include a polyester polyol, a polyether polyol, a polycarbonate polyol, and other polyols.

Specific examples of the polyester polyol include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, polybutylene isophthalate diol, polycaprolactone diol, and poly-3-methylvalerolactone diol. The polyester polyol has excellent heat resistance. Thus, when the resin composition includes the polyurethane resin and the polyol component of the polyurethane resin is the polyester polyol, the adhesive layer formed by the resin composition has excellent heat resistance.

Specific examples of the polyether polyol include polyethylene glycol, polypropylene glycol, polytetramethylene glycol, and a random/block copolymer thereof. The polyether polyol has excellent hydrolysis resistance. Thus, when the resin composition includes the polyurethane resin and the polyol component of the polyurethane resin is the polyether polyol, the adhesive layer made of the resin composition has excellent hydrolysis resistance.

Specific examples of the polycarbonate polyol include polytetramethylene carbonate diol, polypentamethylene carbonate diol, polyneopentyl carbonate diol, polyhexamethylene carbonate diol, poly(1,4-cyclohexanedimethylene carbonate) diol, and a random/block copolymer thereof. The polycarbonate polyol has excellent heat resistance and excellent hydrolysis resistance. Thus, when the resin composition includes the polyurethane resin and the polyol component of the polyurethane resin is the polycarbonate polyol, the adhesive layer made of the resin composition has excellent heat resistance and excellent hydrolysis resistance.

Other specific examples of the polyol component include a dimer diol and a hydrogenated product thereof, a polybutadiene polyol and a hydrogenated product thereof, a polyisoprene polyol and a hydrogenated product thereof, an acrylic polyol, an epoxy polyol, a polyether ester polyol, a siloxane-modified polyol, α,ω-polymethyl methacrylate diol, and α,ω-polybutyl methacrylate diol. Among these, the hydrogenated product of the dimer diol and the hydrogenated product of the polybutadiene polyol have excellent heat resistance and excellent hydrolysis resistance, similar to the polycarbonate polyol. Thus, when the resin composition includes the polyurethane resin and the polyol component of the polyurethane resin is the hydrogenated product of the dimer diol or the hydrogenated product of the polybutadiene polyol, the adhesive layer made of the resin composition has excellent heat resistance and excellent hydrolysis resistance.

As the resin composition including the polyurethane resin, that is, as the urethane resin composition, used can be, for example, a product named "TYFORCE SA-30-L" manufactured by DIC Corporation. "TYFORCE SA-30-L" is obtained by suspending the polyurethane resin at a specific condensation (15 to 25 mass %) in a mixed organic solvent of toluene (TOL) and methyl ethyl ketone (MEK) (toluene (TOL): 40 to 50 vol%, methyl ethyl ketone (MEK): 30 to 40 vol%).

As the polyisocyanate component, a conventionally known polyisocyanate component used for producing the polyurethane resin can be used.

Specific examples of the polyisocyanate component include: aromatic diisocyanates such as toluene-2,4-diisocyanate, toluene-2,6-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), and crude or polymeric MDI, durylene diisocyanate, xylylene diisocyanate (XDI), 1,5-naphthalene diisocyanate, benzidine diisocyanate, o-nitrobenzidine diisocyanate, and 4,4'-diisocyanate dibenzyl; aliphatic diisocyanates such as methylene diisocyanate and 1,4-tetramethylene diisocyanate; alicyclic diisocyanates such as 1,4-cyclohexylene diisocyanate, 4,4'-methylenebis(cyclohexyl isocyanate), 1,5-tetrahydronaphthalene diisocyanate, isophorone diisocyanate, and hydrogenated XDI; and polyurethane prepolymers obtained by reacting these diisocyanates with low molecular weight polyols so that the terminals are isocyanate.

The polyurethane resin can be produced by a conventionally known method for producing polyurethane. For example, the polyurethane resin can be produced by causing the polyol component and the polyisocyanate component to react by a one-shot method or a multiple stage method. The one-shot method and the multiple stage method can be carried out at a temperature usually in a range of 20 °C or more and 150 °C or less, preferably 60 °C or more and 110 °C or less.

Examples of the epoxy resin include various known epoxy resins such as a phenol novolac type epoxy resin, a triphenylmethane type epoxy resin, a cresol novolac type epoxy resin, a bisphenol A type epoxy resin, a modified bisphenol A type epoxy resin, a bisphenol F type epoxy resin, a modified bisphenol F type epoxy resin, a bisphenol AD type epoxy resin, a modified bisphenol AD type epoxy resin, a dicyclopentadiene type epoxy resin, and a biphenyl type epoxy resin. Among these, the phenol novolac type epoxy resin is preferably used as the epoxy resin. The phenol novolac type epoxy resin has an epoxy equivalent of preferably 150 g/eq or more, more preferably 160 g/eq or more, further preferably 170 g/eq or more. The epoxy equivalent is preferably 200 g/eq or less, more preferably 190 g/eq or less, further preferably 180 g/eq or less. The epoxy equivalent can be determined in accordance with JIS K7236.

When the resin composition includes the epoxy resin, it is preferable that the resin composition further include a curing agent for the epoxy resin. Examples of the curing agent for the epoxy resin include a phenol-based curing agent, an amine-based curing agent, and an acid anhydride-based curing agent. The phenol-based curing agent, the amine-based curing agent, and the acid anhydride-based curing agent can be individually used, or two or more of them can be used in combination. Among these, the phenol-based curing agent is preferably used. Examples of the phenol-based curing agent include a phenol novolac resin, an aralkyl-type phenol resin, a dicyclopentadiene-modified phenol resin, a naphthalene-type phenol resin, a bisphenol-type phenol resin, and a triphenylmethane-type phenol resin. Examples of the amine-based curing agent include diaminodiphenylsulfone, dicyandiamide, diaminophenylmethane, and triethylenetetramine. Examples of the acid anhydride-based curing agent include phthalic anhydride, trimellitic anhydride, and maleic anhydride.

In such a case as above, the resin composition can include 10 mass parts or more, can include 20 mass parts or more, can include 30 mass parts or more, can include 40 mass parts or more, of the curing agent for the epoxy resin, based on 100 mass parts of the epoxy resin. Further, in such a case as above, the resin composition can include 70 mass parts or less, can include 60 mass parts or less, can include 50 mass parts or less, of the curing agent for the epoxy resin, based on 100 mass parts of the epoxy resin.

In such a case as above, the resin composition can further include a curing accelerator in addition to the curing agent for the epoxy resin. Examples of the curing accelerator include tetraphenylphosphonium tetraphenylborate, imidazoles, triphenyl phosphate (TPP), and an amine-based curing accelerator. Examples of the amine-based curing accelerator include boron trifluoride monoethylamine. In such a case as above, the resin composition can include 0.1 mass part or more, can include 0.5 mass part or more, can include 1 mass part or more, can include 2 mass parts or more, of the curing accelerator, based on 100 mass parts of the epoxy resin. Further, in such a case as above, the resin composition can include 10 mass parts or less, can include 7 mass parts or less, can include 4 mass parts or less, of the curing accelerator, based on 100 mass parts of the epoxy resin.

When the resin composition includes the epoxy resin, the resin composition can include the acrylic resin in addition to the epoxy resin. It is preferable that the resin composition include the phenol novolac type epoxy resin as the epoxy resin, and further include the polybutyl acrylate (PAB) as the acrylic resin. In such a case as above, the resin composition can include 100 mass parts or more, can include 150 mass parts or more, can include 200 mass parts or more, of the acrylic resin, based on 100 mass parts of the epoxy resin. The resin composition can include 300 mass parts or less, can include 250 mass parts or less, of the acrylic resin, based on 100 mass parts of the epoxy resin.

As has been described above, in the first adhesive layer 2a and the second adhesive layer 2b of the insulating sheet 10 according to this embodiment, the temperature at which a mass reduction by 5 mass % is observed in thermogravimetric differential thermal analysis (TG-DTA) is 350 °C or less. This configuration allows an organic matter such as the resin included in the first adhesive layer 2a and the second adhesive layer 2b to be thermally decomposable easily when the insulating sheet 10 according to this embodiment is exposed to a high-temperature atmosphere. The temperature at which a mass reduction by 5 mass % is observed can be determined by the method described in Examples.

The insulating sheet 10 according to this embodiment is used, for example, in a drive motor including a rotor, a stator with a plurality of slot grooves, and a plurality of coils housed in the plurality of slot grooves, to ensure insulation between the stator and the plurality of coils. Specifically, the insulating sheet 10 according to this embodiment is used to ensure insulation between the stator and the plurality of coils by being housed in each of the plurality of slot grooves in a state of being wrapped around each of the plurality of coils.

When the drive motor is driven, the inner surface of each of the plurality of slot grooves reaches a high temperature. As described above, in the first adhesive layer 2a and the second adhesive layer 2b of the insulating sheet 10 according to this embodiment, the organic matter such as the resin included in these adhesive layers is thermally decomposable easily. Thus, the thermal decomposition of the organic matter included in the first adhesive layer 2a and the second adhesive layer 2b proceeds before the thermal decomposition of the organic matter included in the insulating paper sheet (i.e., any one of the first insulating paper sheet 3a and the second insulating paper sheet 3b) in contact with the inner surface of each of the plurality of slot grooves proceeds on an outer surface of the insulating paper sheet.

The heat thus generated with the inner surfaces of the plurality of slot grooves reaching a high temperature is consumed to thermally decompose the organic matter included in the first adhesive layer 2a and the second adhesive layer 2b, thereby suppressing the thermal decomposition of the organic matter included in the insulating paper sheet on the outer surface of the insulating paper sheet. Since the thermal decomposition of the organic matter included in the insulating paper sheet is suppressed, conductive paths resulting from free carbon are suppressed from being formed on the outer surface of the insulating paper sheet.

Further, since the organic matter included in the first adhesive layer 2a and the second adhesive layer 2b is thermally decomposable easily, the organic matter becomes thermally decomposed sufficiently to a gas such as carbon dioxide without remaining in a state of free carbon. Since the above reaction that produces a gas is an endothermic reaction, the endothermic reaction also takes heat generated on the inner surfaces of the plurality of slot grooves. This also suppresses the thermal decomposition of the organic matter included in the insulating paper sheet on the outer surface of the insulating paper sheet, and thus conductive paths resulting from free carbon are further suppressed from being formed on the outer surface.

As described above, the insulating sheet 10 according to this embodiment can exhibit sufficient tracking resistance although the first insulating paper sheet 3a and the second insulating paper sheet 3b forming the outermost layers are made of the fully aromatic polyamide paper.

Each of the first adhesive layer 2a and the second adhesive layer 2b has a thickness of preferably 5 µm or more, more preferably 10 µm or more, further preferably 20 µm or more. The thickness of each of the first adhesive layer 2a and the second adhesive layer 2b is preferably 40 µm or less. The thickness of each of the first adhesive layer 2a and the second adhesive layer 2b can be measured using a digital microscope (e.g., model VHX-8000 manufactured by KEYENCE CORPORATION). Specifically, the thickness can be measured as follows:
(1) An image of one lateral side of the insulating sheet 10 is obtained by a camera of the digital microscope.
(2) The image is displayed on a monitor of the digital microscope.
(3) In the image displayed on the monitor, thicknesses are measured at 10 randomly selected portions of each of the first adhesive layer 2a and the second adhesive layer 2b, and the measured thickness values for each of the first adhesive layer 2a and the second adhesive layer 2b are arithmetically averaged.

In the insulating sheet 10 according to this embodiment, it is preferable that, where T_{IP} represents the thickness of the insulating paper sheets (total of the thickness of the first insulating paper sheet 3a and the thickness of the second insulating paper sheet 3b) and T_{AL} represents the thickness of the adhesive layers (total of the thickness of the first adhesive layer 2a and the thickness of the second adhesive layer 2b), a ratio of the thickness T_{AL} to the thickness T_{IP} be 40% or more.

The ratio of the thickness T_{AL} to the thickness T_{IP} being within the above numerical range means that, in the insulating sheet 10 according to this embodiment, each of the first adhesive layer 2a and the second adhesive layer 2b has a sufficient thickness. Further, the fact that each of the first adhesive layer 2a and the second adhesive layer 2b has a sufficient thickness means that the organic matter that is thermally decomposable easily is more sufficiently present in the insulating sheet 10 according to this embodiment. Thus, the ratio of the thickness T_{AL} to the thickness T_{IP} being within the above numerical range allows the organic matter included in the first adhesive layer 2a and the second adhesive layer 2b to be thermally decomposed more sufficiently. This can consequently further suppress the organic matter included in the first insulating paper sheet 3a and the second insulating paper sheet 3b from being thermally decomposed on the outer surfaces of these insulating paper sheets, and can thus suppress the conductive paths resulting from free carbon from being formed on the outer surfaces of the insulating paper sheets. The insulating sheet 10 according to this embodiment can thus exhibit more sufficient tracking resistance.

In the insulating sheet 10 according to this embodiment, the ratio of the thickness T_{AL} to the thickness T_{IP} is more preferably 45% or more, further preferably 50% or more, yet further preferably 55% or more, still further preferably 60% or more. The ratio of the thickness T_{AL} to the thickness T_{IP} falling within the above numerical range enables the insulating sheet 10 according to this embodiment to exhibit further sufficient tracking resistance. The ratio of the thickness T_{AL} to the thickness T_{IP} can be 80% or less, can be 70% or less.

Further, in the insulating sheet 10 according to this embodiment, where T_{T} represents the thickness of the insulating sheet 10 (total thickness), a ratio of the thickness T_{AL} to the thickness T_{T} is preferably 21% or more, more preferably 22% or more, further preferably 23% or more. The ratio of the thickness T_{AL} to the thickness T_{T} falling within the above numerical range enables the insulating sheet 10 according to this embodiment to exhibit further sufficient tracking resistance. The ratio of the thickness T_{AL} to the thickness T_{T} can be 30% or less, can be 28% or less, can be 26% or less.

The first adhesive layer 2a and the second adhesive layer 2b can include various known additives. Examples of the additives include tackifiers, dispersants, aging retardants, antioxidants, processing aids, stabilizers, defoaming agents, flame retardants, thickeners, and pigments.

In the insulating sheet 10 according to a first embodiment, the base material film 1a is preferably a polyester film made of the polyester resin. Examples of the polyester resin include a polybutylene terephthalate (PBT) resin, a polyethylene terephthalate (PET) resin, a polybutylene naphthalate (PBN) resin, and a polyethylene naphthalate (PEN) resin. Among these, any of the polyethylene terephthalate (PET) resin and the polyethylene naphthalate (PEN) resin is preferable as the polyester resin forming the polyester film. That is, the polyester film is preferably any of the polyethylene terephthalate (PET) film and the polyethylene naphthalate (PEN) film. The base material film 1a can be a polyimide (PI) film made of a polyimide (PI) resin.

When the base material film 1a is the PET film or the PEN film, the film can be made of a low-oligomer product having an oligomer content of 1 mass % or less. The film made of a low-oligomer product allows the base material film 1a to have excellent hydrolysis resistance. The oligomer content can be determined, for example, as follows:
(1) A film sample having a substantially square shape with a side of about 5 cm is washed with methanol, and then the film sample is dried in a hot air oven at 160 °C for an hour to determine an initial mass (M₁ (g)).
(2) The film sample is subjected to extraction treatment with boiling xylene (about 400 mL) using, for example, a Soxhlet extractor for 48 hours.
(3) The mass (M₂ (g)) of the film sample after the extraction treatment is measured to calculate a ratio of a mass reduction (M₁-M₂) to the initial mass (M₁) ((M₁-M₂) / M₁).

The mass reduction cannot be accurately determined unless the mass (M₂ (g)) of the film sample after the extraction treatment is measured after the xylene used for the extraction treatment is thoroughly removed from the film sample. It is therefore preferable that the mass (M₂ (g)) be measured after the film sample is washed with water after the xylene extraction and the xylene attached to the surface of the film sample is gently wiped off, further followed by drying the film sample in a hot air oven at 160 °C for 8 hours and cooling the film sample in a desiccator.

The base material film 1a has a thickness of preferably 10 µm or more, more preferably 15 µm or more, further preferably 25 µm or more. The thickness of the base material film 1a is preferably 250 µm or less, more preferably 100 µm or less, further preferably 75 µm or less. The thickness of the base material film 1a can also be measured in the same manner as in the thickness of each of the first insulating paper sheet 3a and the second insulating paper sheet 3b.

The insulating sheet 10 according to this embodiment has a volume resistivity of preferably 1 × 10¹³ Ω·cm or more, more preferably 1 × 10¹⁴ Ω·cm or more. The insulating sheet 10 according to this embodiment having the volume resistivity as above can exhibit excellent electrical insulation.

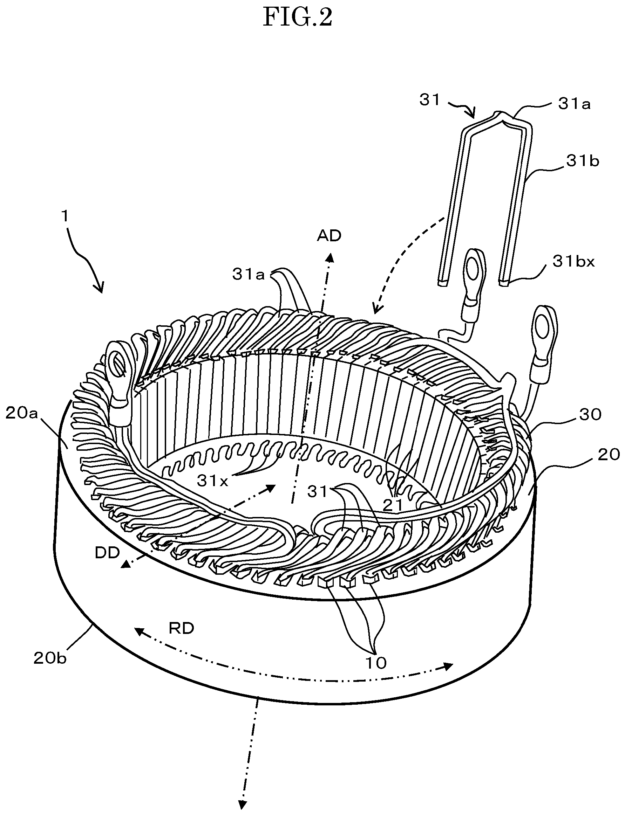

The insulating sheet 10 according to this embodiment is used for the drive motor of the automobile as described above. Accordingly, a description will be hereinafter given on an example in which the insulating sheet 10 according to this embodiment is used for the drive motor of the automobile, with reference to Figs. 2 to 4.

The drive motor includes the rotor equipped with a permanent magnet and the stator equipped with a coil, and the coil is formed of a segment conductor. The insulating sheet 10 according to this embodiment is used for insulation between the coil and the core in the stator.

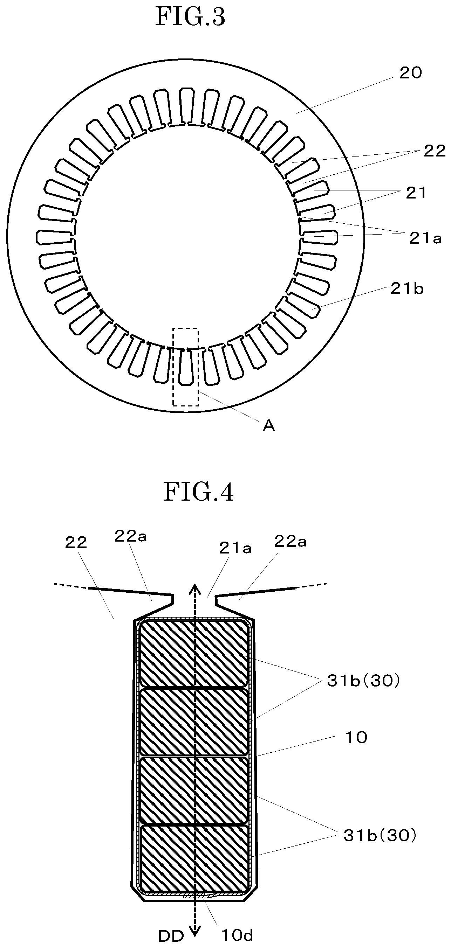

Fig. 2 is a perspective view of a stator 1 of the drive motor, and the stator 1 includes a stator core 20 and a coil 30 as shown in the figure. Fig. 3 is a plan view of this stator 1 as viewed from a rotation axis direction (arrow AD) of the rotor (not shown), and Fig. 4 is a cross-sectional view showing a state in which a plurality of the coils 30 are housed in a part A of the stator core 20 shown in Fig. 3.

As shown in these figures, the stator 1 has a plurality of slot grooves 21 formed on an inner circumferential surface side of the stator core 20 having a cylindrical shape. The stator 1 includes the stator core 20, and the plurality of coils 30 housed in the plurality of slot grooves 21 formed in the stator core 20. The plurality of slot grooves 21 each extend along the rotation axis direction (AD in Fig. 2) of the stator core 20, and are disposed in the stator core 20 at certain intervals from each other in a circumferential direction (RD in Fig. 2) of the stator core 20. Each of the plurality of slot grooves 21 is formed over the entire length in the rotation axis direction of the stator core 20, and an opening 21b having the same shape as the cross-sectional shape of the slot groove 21 is formed on each of one end surface 20a (the upper side in Fig. 3, hereinafter referred to also as "upper end surface 20a") and the other end surface 20b (hereinafter referred to also as the "lower end surface 20b") of the stator core 20.

In the stator core 20 in which the plurality of slot grooves 21 are arranged in parallel with each other as described above, a plate-shaped projection 22 is formed between each adjacent ones of the plurality of slot grooves 21. A plurality of the plate-shaped projections 22 (hereinafter referred to also as "teeth 22") are formed to protrude inwardly in a radial direction (DD direction in Fig. 2) of the stator core 20. As shown in Fig. 3 and Fig. 4, each of the teeth 22 has a wide part 22a widening in the circumferential direction RD of the stator core 20 at a leading end portion in the protruding direction, and has a T-shape in cross section. Thus, the slot groove 21 has a smaller width with a linear-shaped opening 21a slightly formed on the inner circumferential surface side of the stator core 20.

The coils 30 each are formed of a plurality of segment conductors 31 connected to each other. As shown in Fig. 2, each of the plurality of segment conductors 31 before being formed into the coils is a rectangular enamel wire bent into a U shape, and includes two leg parts 31b and a head part 31a connecting these two leg parts 31b with each other.

The segment conductor 31 has an exposed copper wire portion from which an insulation coating is peeled off, at a leading end portion 31bx of each of the leg parts 31b opposite to the head part 31a. The coils 30 are produced by inserting the leg part 31b of the segment conductor 31 into one of the plurality of slot grooves 21 through the opening 21b on the upper end surface 20a and causing the leading end portion 31bx thereof to be exposed through the lower end surface 20b of the stator core 20, thereafter electrically connecting one leg part 31 of one segment conductor 31 and one leg part 31b of another segment conductor 31 with each other at their exposed copper wire portions to form a connecting part 31x, and further subjecting the connecting part 31x to insulation treatment. The two leg parts 31b of one segment conductor 31 are inserted into different slot grooves 21.

Since the coils 30 are produced as above, the stator 1 has an upper side coil end part formed of the head parts 31a of the segment conductors 31 on the upper end surface 20a side of the stator core 20, and a lower side coil end part formed of the connecting parts 31x each formed by connecting the leg parts 31b with each other on the lower end surface 20b side.

As shown in Fig. 4, four leg parts 31b of the segment conductors 31 forming the coils 30 are housed (i.e., one leg parts 31b respectively of the four segment conductors 31 are housed) in each of the slot grooves 21 of the stator core 20, and the total four leg parts 31b are housed in each slot groove 21 so as to be lined up from the inner circumferential surface side toward an outer circumferential surface side of the stator core 20.

As shown in Fig. 4, the insulating sheet 10 according to this embodiment is placed between the four leg parts 31b and the inner wall surface of the slot groove 21. The insulating sheet 10 according to this embodiment is disposed within the slot groove 21 in the form of being attached vertically along a longitudinal direction of the leg parts 31b of the segment conductors 31 and wrapped around the four leg parts 31b one or more times, and is disposed within the slot groove 21 to have both end parts in the rotation axis direction AD projecting outward in the rotation axis direction AD from the upper end surface 20a and the lower end surface 20b of the stator core 20. As described above, the insulating sheet 10 according to this embodiment is disposed within the slot groove 21 so as to be wrapped around the four leg parts 31b one or more times, and thus has both end parts in this wrapping direction overlapping each other within the slot groove 21. That is, in the stator 1, an overlapping part 10d in which portions of the insulating sheet 10 according to this embodiment overlap each other are formed in the slot groove 21 (see Fig. 4). As shown in Fig. 4, in the stator 1, the overlapping part 10d is located on an outer side in the radial direction DD. Portions of the insulating sheet 10 according to this embodiment that project in the rotation axis direction AD respectively from the upper end surface 20a and the lower end surface 20b of the stator core 20 can be bent outward of the slot groove 21 so as to be hooked onto (engaged with) at least one of the upper end side and the lower end side of the slot groove 21.

The coils 30 around which the insulating sheet 10 according to this embodiment is wrapped are fixed within the slot groove 21 by an insulating resin (e.g., epoxy varnish) impregnated in the slot groove 21.

The matters disclosed herein include the following:
(1) An insulating sheet including: an adhesive layer; and an insulating paper sheet laminated on one surface of the adhesive layer to form an outermost layer, in which the insulating paper sheet is made of fully aromatic polyamide paper including fully aromatic polyamide fibers, the adhesive layer is made of a resin composition, and a temperature at which a mass reduction by 5 mass % of the adhesive layer is observed in thermogravimetric differential thermal analysis (TG-DTA) is 350 °C or less.
   Such a configuration enables the insulating sheet to exhibit sufficient tracking resistance.
(2) The insulating sheet according to (1) above, in which, when T_{IP} represents a thickness of the insulating paper sheet and T_{AL} represents a thickness of the adhesive layer, a ratio of the thickness T_{AL} to the thickness T_{IP} is 40% or more.
   Such a configuration enables the insulating sheet to more sufficiently exhibit tracking resistance.
(3) The insulating sheet according to (1) or (2) above, further including a base material film on an other surface of the adhesive layer, in which the base material film is a polyethylene terephthalate film or a polyethylene naphthalate film.
   Such a configuration enables the insulating sheet to have excellent heat resistance.
(4) The insulating sheet according to any of (1) to (3) above, in which the adhesive layer is made of an acrylic resin composition including an acrylic resin.

Such a configuration enables the insulating sheet to more sufficiently exhibit tracking resistance.

The insulating sheet according to the present invention is not limited to the above embodiment. Further, the insulating sheet according to the present invention is not limited by the abovementioned operational effects, either. Various modifications can be made to the insulating sheet according to the present invention without departing from the gist of the present invention.

For example, the aforementioned embodiment has been described by taking, for example, the case where the insulating sheet 10 has the five-layer structure in which the first insulating paper sheet 3a, the first adhesive layer 2a, the base material film 1a, the second adhesive layer 2b, and the second insulating paper sheet 3b are laminated on each other in this order, but the insulating sheet according to the present invention is not limited to the one with the five-layer structure. The configuration can be such that the insulating sheet has a three-layer structure in which one adhesive layer is sandwiched between two sheets of the fully aromatic polyamide paper being the insulating paper sheets from both surface sides. That is, the insulating sheet according to the present invention can have a three-layer structure in which one insulating paper sheet, the adhesive layer, and another insulating paper sheet are laminated on each other in this order. The insulating sheet having such a three-layer structure can still make small the ratio of carbon atoms generated by the thermal decomposition in the adhesive layer, and can thus suppress conductive paths from being formed by the carbon atoms on the outer surfaces of the fully aromatic polyamide paper sheets being the insulating paper sheets serving as the outermost layers. In summary, the configuration can be such that the insulating sheet according to the present invention includes the fully aromatic polyamide paper sheets being the insulating paper sheets as the outermost layers, and has the adhesive layer laminated on one surface of each of the insulating paper sheets.

### EXAMPLES

Next, a description will be given in more detail on the present invention by way of Examples and Comparative Examples. The following Examples are provided to describe the present invention in more detail, and are not intended to limit the scope of the present invention.

### (Example 1)

As an insulating sheet according to Example 1, a sheet (a five-layer sheet) having layers laminated in the following order was produced.
Fully aromatic polyamide paper sheet (first insulating paper sheet, 50 µm thick)
Acrylic resin layer (first adhesive layer, 30 µm thick)
Polyethylene terephthalate (PET) film (base material film, 75 µm thick)
Acrylic resin layer (second adhesive layer, 30 µm thick)
Fully aromatic polyamide paper sheet (second insulating paper sheet, 50 µm thick)

The insulating sheet according to Example 1 had a thickness of 235 µm. In the insulating sheet according to Example 1, the acrylic resin layers (first adhesive layer and second adhesive layer) were formed by applying an acrylic resin solution, which was obtained by suspending polybutyl acrylate (PAB), terpene phenol, and polyisocyanate in an organic solvent (methyl ethyl ketone (MEK)) to a solid concentration of 27%, to both surfaces of a polyethylene terephthalate (PET) film to have a thickness each of 30 µm. The acrylic resin solution was applied to the polyethylene terephthalate (PET) film using a roll coater at a coating gap of 250 µm. The viscosity of the acrylic resin solution was about 300 mPa·s. The acrylic resin layers being the first adhesive layer and the second adhesive layer were subjected to aging treatment at a temperature of 130 °C for 24 hours. That is, in the insulating sheet according to Example 1, the acrylic resin layers were thermally cured. As the fully aromatic polyamide paper sheet, Nomex (registered trademark) paper manufactured by DuPont was used, and as the polyethylene terephthalate (PET) film, "Melinex (registered trademark) 238" manufactured by DuPont was used.

### (Example 2)

As an insulating sheet according to Example 2, a laminate sheet having a five-layer structure was produced in the same manner as in Example 1. The insulating sheet according to Example 2 had the same configuration as that of the insulating sheet according to Example 1, except that the fully aromatic polyamide paper sheet having a thickness of 40 µm ("Nomex (registered trademark) paper" manufactured by DuPont) was used as the first insulating paper sheet and the second insulating paper sheet, and a PET film having a thickness of 125 µm ("Melinex (registered trademark) 238" manufactured by DuPont) was used as the base material film. The insulating sheet according to Example 2 had a thickness of 265 µm. In the insulating sheet according to Example 2 also, the acrylic resin layers being the first adhesive layer and the second adhesive layer were subjected to aging treatment under the same conditions as those for Example 1. That is, in the insulating sheet according to Example 2 also, the acrylic resin layers were thermally cured.

### (Example 3)

As an insulating sheet according to Example 3, a laminate sheet having a five-layer structure was produced in the same manner as in Example 1. The insulating sheet according to Example 3 had the same configuration as that of the insulating sheet according to Example 1, except that a PET film having a thickness of 125 µm ("Melinex (registered trademark) 238" manufactured by DuPont) was used as the base material film. The insulating sheet according to Example 3 had a thickness of 285 µm. In the insulating sheet according to Example 3 also, the acrylic resin layers being the first adhesive layer and the second adhesive layer were subjected to aging treatment under the same conditions as those for Example 1. That is, in the insulating sheet according to Example 3 also, the acrylic resin layers were thermally cured.

### (Example 4)

As an insulating sheet according to Example 4, a laminate sheet having a five-layer structure was produced in the same manner as in Example 1. The insulating sheet according to Example 4 had the same configuration as that of the insulating sheet according to Example 1, except that the fully aromatic polyamide paper sheet having a thickness of 80 µm ("Nomex (registered trademark) paper" manufactured by DuPont) was used as the first insulating paper sheet and the second insulating paper sheet. The insulating sheet according to Example 4 had a thickness of 295 µm. In the insulating sheet according to Example 4 also, the acrylic resin layers being the first adhesive layer and the second adhesive layer were subjected to aging treatment under the same conditions as those for Example 1. That is, in the insulating sheet according to Example 4 also, the acrylic resin layers were thermally cured.

### (Example 5)

As an insulating sheet according to Example 5, a laminate sheet having a five-layer structure was produced in the same manner as in Example 1. The insulating sheet according to Example 5 had the same configuration as that of the insulating sheet according to Example 1, except that the acrylic resin layers being the first adhesive layer and the second adhesive layer each had a thickness of 10 µm. The insulating sheet according to Example 5 had a thickness of 195 µm. In the insulating sheet according to Example 5, the acrylic resin layers were formed by applying an acrylic resin solution, which was obtained by suspending polybutyl acrylate (PAB), terpene phenol, and polyisocyanate to a solid concentration of 19%, to both surfaces of a polyethylene terephthalate (PET) film to have a thickness each of 10 µm. The acrylic resin solution was applied to the polyethylene terephthalate (PET) film using a roll coater at a coating gap of 70 µm. The viscosity of the acrylic resin solution was about 300 mPa·s. In the insulating sheet according to Example 5 also, the acrylic resin layers being the first adhesive layer and the second adhesive layer were subjected to aging treatment under the same conditions as those for Example 1. That is, in the insulating sheet according to Example 5 also, the acrylic resin layers were thermally cured.

### (Example 6)

As an insulating sheet according to Example 6, a laminate sheet having a five-layer structure was produced in the same manner as in Example 1. The insulating sheet according to Example 6 had the same configuration as that of the insulating sheet according to Example 1, except that the acrylic resin layers being the first adhesive layer and the second adhesive layer had a thickness each of 20 µm. The insulating sheet according to Example 6 had a thickness of 215 µm. In the insulating sheet according to Example 6, the acrylic resin layers were formed by applying an acrylic resin solution, which was obtained by suspending polybutyl acrylate (PAB), terpene phenol, and polyisocyanate to a solid concentration of 27%, to both surfaces of a polyethylene terephthalate (PET) film to have a thickness each of 20 µm. The acrylic resin solution was applied to the polyethylene terephthalate (PET) film using a roll coater at a coating gap of 170 µm. The viscosity of the acrylic resin solution was about 300 mPa·s. In the insulating sheet according to Example 6 also, the acrylic resin layers being the first adhesive layer and the second adhesive layer were subjected to aging treatment under the same conditions as those for Example 1. That is, in the insulating sheet according to Example 6 also, the acrylic resin layers were thermally cured.

### (Example 7)

As an insulating sheet according to Example 7, a laminate sheet having a five-layer structure was produced in the same manner as in Example 1. The insulating sheet according to Example 7 had the same configuration as that of the insulating sheet according to Example 1, except that the first adhesive layer and the second adhesive layer were urethane resin layers (having a thickness each of 10 µm). In the insulating sheet according to Example 7, the polyurethane resin layers (first adhesive layer and second adhesive layer) were formed by applying an polyurethane resin solution ("TYFORCE SA-30-L" manufactured by DIC Corporation), which was obtained by suspending a urethane bonded product of polyol components and isocyanate components in an organic solvent (mixed organic solvent of toluene (TOL) and methyl ethyl ketone (MEK)) to a solid concentration of 25%, to both surfaces of a polyethylene terephthalate (PET) film to have a thickness each of 10 µm. The urethane resin solution was applied to the polyethylene terephthalate (PET) film using a roll coater at a coating gap of 70 µm. In the insulating sheet according to Example 7 also, the urethane resin layers being the first adhesive layer and the second adhesive layer were subjected to aging treatment at a temperature of 130 °C for 24 hours. That is, in the insulating sheet according to Example 7, the urethane resin layers were thermally cured.

### (Comparative Example 1)

As an insulating sheet according to Comparative Example 1, a laminate sheet having a five-layer structure was produced in the same manner as in Example 1. The insulating sheet according to Comparative Example 1 had the same configuration as that of the insulating sheet according to Example 1, except that the first adhesive layer and the second adhesive layer were mixed resin layers (having a thickness each of 10 µm) of an acrylic resin (polybutyl acrylate (PAB)), an epoxy resin (phenol novolac type epoxy resin with an epoxy equivalent of 176 g/eq to 180 g/eq), and a curing agent of the epoxy resin (phenol-based curing agent). The insulating sheet according to Comparative Example 1 had a thickness of 195 µm. In the insulating sheet according to Comparative Example 1, the mixed resin layers (first adhesive layer and second adhesive layer) were formed by applying a mixed resin solution, which was obtained by further adding a phenol novolac type epoxy resin, a phenol-based curing agent, and a curing accelerator to an organic solvent (methyl ethyl ketone (MEK)) including polybutyl acrylate (PAB), to both surfaces of a polyethylene terephthalate (PET) film to have a thickness each of 10 µm. The polybutyl acrylate was included in an amount of 140 mass parts based on 100 mass parts of the organic solvent, and the phenol novolac type epoxy resin was included in an amount of 60 mass parts based on 100 mass parts of the organic solvent. Further, the phenol-based curing agent was included in an amount of 45 mass parts, and the curing accelerator was included in an amount of 3 mass parts, based on 100 mass parts of the phenol novolac type epoxy resin. The mixed resin solution was applied to the polyethylene terephthalate (PET) film using a roll coater at a coating gap of 70 µm. In the insulating sheet according to Comparative Example 1 also, the mixed resin layers being the first adhesive layer and the second adhesive layer were subjected to aging treatment at a temperature of 130 °C for 24 hours. That is, in the insulating sheet according to Comparative Example 1 also, the mixed resin layers were thermally cured.

### <Evaluation of thermal decomposability by thermogravimetric differential thermal analysis (TG-DTA)>

The adhesive layer of each of Examples was evaluated for thermal decomposablity by thermogravimetric differential thermal analysis (TG-DTA). Specifically, the adhesive layer was evaluated according to the following procedure.
(1) The resin composition according to each of Examples is applied entirely to one surface of a release liner, and then dried at 100 °C for a minute to produce a release liner with the adhesive layer for each of Examples.
   The application is carried out so that the adhesive layer after being dried has a thickness of 12 µm.
(2) The release liner with the adhesive layer of each Example is left in an oven at a specific temperature for a specific period of time to allow a curing reaction in the adhesive layer to proceed.
   The release liner with the adhesive layer of each Example is left in an oven at 130 °C for 24 hours to allow a curing reaction in the adhesive layer to proceed.
   After the curing reaction has proceeded, the release liner is removed from the release liner with the adhesive layer of each Example.
(3) A TG-DTA curve is obtained for the adhesive layer according to each of Examples that has been removed from the release liner, by raising the temperature from ordinary temperature (23 ± 2 °C) at a rate of 10 °C/min in an atmosphere of 100 mL/min of air using a thermogravimetric differential thermal analyzer (model "EXSTAR6000" manufactured by SII NanoTechnology, Inc.). Then, the temperature at which a mass reduction by 5 mass % is observed is read.

The read temperature at which a mass reduction by 5 mass % is observed (i.e., temperature of 5% mass reduction) for the adhesive layer according to each of Examples is shown in Table 1 below.

<Evaluation test for tracking resistance (CTI)>

The test was carried out in accordance with an International Electrotechnical Commission standard, specifically IEC 60112. Specifically, 20 test samples each having a flat plate shape with a size of 100 mm × 100 mm and a thickness of 3 mm or more were prepared. Platinum electrodes were placed on a surface of the test sample, a voltage was applied between the electrodes, and an electrolyte (aqueous 0.1 mass % ammonium chloride solution) was dropped at regular intervals between the electrodes with the voltage kept applied therebetween. The test was continued until tracking occurred or until the number of drops reached 100. Then, the number of drops of the electrolyte required to cause the tracking to occur was counted. Five tests were performed for each voltage, and the applied voltage was determined to be acceptable if the number of drops counted was 50 or more for all the tests. This operation was repeatedly performed at various voltages in increments of 25 V to determine a CTI (comparative tracking index). The evaluation result of the tracking resistance (CTI) for each of Examples is shown in Table 1 below.

Table 1 below also shows the ratio of the thickness of the adhesive layers T_{AL} (T_{AL1} + T_{AL2}) to the thickness of the insulating paper sheets T_{IP} (T_{IP1} + T_{IP2}), and the ratio of the thickness of the adhesive layers T_{AL} to the thickness of the insulating sheet T_{T}.

**Table 1**

| | | Ex. 1 | Ex. 2 | Ex. 3 | Ex. 4 |
|---|---|---|---|---|---|
| First insulating paper sheet | Material | Aramid paper | Aramid paper | Aramid paper | Aramid paper |
| | Thickness T_{IP1} [µm] | 50 | 40 | 50 | 80 |
| First adhesive layer | Material | Acrylic resin layer | Acrylic resin layer | Acrylic resin layer | Acrylic resin layer |
| | Thickness T_{AL1} [µm] | 30 | 30 | 30 | 30 |
| Base material film | Material | PET film | PET film | PET film | PET film |
| | Thickness T_{BF} [µm] | 75 | 125 | 125 | 75 |
| Second adhesive layer | Material | Acrylic resin layer | Acrylic resin layer | Acrylic resin layer | Acrylic resin layer |
| | Thickness T_{AL1} [µm] | 30 | 30 | 30 | 30 |
| Second insulating paper sheet | Material | Aramid paper | Aramid paper | Aramid paper | Aramid paper |
| | Thickness T_{IP2} [µm] | 50 | 40 | 50 | 80 |
| Insulating sheet thickness T_{T} [µm] | | 235 | 265 | 285 | 295 |
| T_{AL} /T_{IP} × 100 | | 60 | 75 | 60 | 38 |
| T_{AL} / T_{T} × 100 | | 26 | 23 | 21 | 20 |
| Temperature of 5% mass reduction [°C] | | 296 | 296 | 296 | 296 |
| Tracking resistance (CTI) [V] | | 600 | 600 | 575 | 400 |
| | | Ex. 5 | Ex. 6 | Ex. 7 | C. Ex. 1 |
| First insulating paper sheet | Material | Aramid paper | Aramid paper | Aramid paper | Aramid paper |
| | Thickness T_{IP1} [µm] | 50 | 50 | 50 | 50 |
| First adhesive layer | Material | Acrylic resin layer | Acrylic resin layer | Urethane resin layer | Epoxy resin layer |
| | Thickness T_{AL1} [µm] | 10 | 20 | 10 | 10 |
| Base material film | Material | PET film | PET film | PET film | PET film |
| | Thickness T_{BF} [µm] | 75 | 75 | 75 | 75 |
| Second adhesive layer | Material | Acrylic resin layer | Acrylic resin layer | Urethane resin layer | Epoxy resin layer |
| | Thickness T_{AL1} [µm] | 10 | 20 | 10 | 10 |
| Second insulating paper sheet | Material | Aramid paper | Aramid paper | Aramid paper | Aramid paper |
| | Thickness T_{IP2} [µm] | 50 | 50 | 50 | 50 |
| Insulating sheet thickness T_{T} [µm] | | 195 | 215 | 195 | 195 |
| T_{AL} / T_{IP} × 100 | | 20 | 40 | 20 | 20 |
| T_{AL} / T_{T} × 100 | | 10 | 19 | 10 | 10 |
| Temperature of 5% mass reduction [°C] | | 296 | 296 | 315 | 357 |
| Tracking resistance (CTI) [V] | | 475 | 525 | 475 | 375 |

It can be seen from Table 1 that the insulating sheet according to each of Examples has a temperature of 5% mass reduction of 350 °C or less and has the result of the tracking resistance evaluation of 400 V or more, whereas the insulating sheet according to Comparative Example 1 has a temperature of 5% mass reduction of 357 °C, which exceeds 350 °C, and has the result of the tracking resistance evaluation of 375 V, which falls below 400 V. It is understood from the result that the insulating sheet excellent in tracking resistance can be obtained by setting the temperature of 5% mass reduction to 350 °C or less. Further, it can be seen from Table 1 that the result of the tracking resistance evaluation shows a value as high as 525 V or higher when the ratio of the thickness T_{AL} to the thickness T_{IP} is set to 40% or more (Examples 1 to 3 and Example 6). It is understood from the result that the insulating sheet more excellent in tracking resistance can be obtained by setting the ratio of the thickness T_{AL} to the thickness T_{IP} to 40% or more.

### REFERENCE SIGNS LIST

1: Stator
10: Insulating sheet
20: Stator core
21: Slot groove
22: Plate-shaped projections (teeth)
30: Coil
31: Segment conductor
1a: Base material film
2a: First adhesive layer
2b: Second adhesive layer
3a: First insulating paper sheet
3b: Second insulating paper sheet
10d: Overlapping part
20a: End surface (upper end surface)
20b: End surface (lower end surface)
21a: Linear-shaped opening
21b: Opening
22a: Wide part
31a: Head part
31b: Leg part
31bx: Leading end portion
31x: Connecting part
AD: Rotation axis direction
DD: Radial direction
RD: Circumferential direction

## Claims

1. An insulating sheet comprising:
an adhesive layer; and
an insulating paper sheet laminated on one surface of the adhesive layer to form an outermost layer, wherein
the insulating paper sheet is made of fully aromatic polyamide paper comprising fully aromatic polyamide fibers,
the adhesive layer is made of a resin composition, and a temperature at which a mass reduction by 5 mass % of the adhesive layer is observed in thermogravimetric differential thermal analysis (TG-DTA) is 350 °C or less.

2. The insulating sheet according to claim 1, wherein, when T_{IP} represents a thickness of the insulating paper sheet and T_{AL} represents a thickness of the adhesive layer, a ratio of the thickness T_{AL} to the thickness T_{IP} is 40% or more.

3. The insulating sheet according to claim 1 or 2, further comprising a base material film on an other surface of the adhesive layer, wherein
the base material film is a polyethylene terephthalate film or a polyethylene naphthalate film.

4. The insulating sheet according to claim 1 or 2, wherein the adhesive layer is made of an acrylic resin composition comprising an acrylic resin.
